(19) Europäisches Patentamt
European Patent Office
Office européen des brevets

(11) **EP 3 247 739 B1**

(12) **FASCICULE DE BREVET EUROPEEN**

(45) Date de publication et mention
de la délivrance du brevet:
**05.05.2021 Bulletin 2021/18**

(21) Numéro de dépôt: **16701008.1**

(22) Date de dépôt: **19.01.2016**

(51) Int Cl.:
***C08J 3/20*** *(2006.01)* ***C08J 5/18*** *(2006.01)*
***C08J 5/24*** *(2006.01)*

(86) Numéro de dépôt international:
**PCT/EP2016/051011**

(87) Numéro de publication internationale:
**WO 2016/116442 (28.07.2016 Gazette 2016/30)**

(54) **COMPOSITES POLYMÉRIQUES MÉTALLIQUES SOUPLES**

BIEGSAME METALLISCHE POLYMERKOMPOSITE

FLEXIBLE METAL POLYMER COMPOSITES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.01.2015 FR 1550411**

(43) Date de publication de la demande:
**29.11.2017 Bulletin 2017/48**

(73) Titulaire: **Metalskin Technologies SAS
34540 Balaruc-les-Bains (FR)**

(72) Inventeur: **PENARI, Stéphane
34540 Balaruc-les-bains (FR)**

(74) Mandataire: **Regimbeau
20, rue de Chazelles
75847 Paris Cedex 17 (FR)**

(56) Documents cités:
**CA-C- 1 307 889 US-A1- 2003 094 337**

**EP 3 247 739 B1**

**Description**

L'objet de la présente invention concerne un composite souple contenant une poudre métallique de cuivre, pouvant en outre comprendre une trame tissée ou non-tissée, l'utilisation de tels composites dans divers objets ou textiles tels que des rideaux ou des sacs, et leur procédé d'obtention.

INTRODUCTION

A l'aube des années 80, une nouvelle technique apparut et révolutionna la façon dont le monde travaille le métal.

Cette technique, qui consiste schématiquement à associer du métal et un liant, permet de recouvrir rapidement quasiment n'importe quel support, quelle qu'en soit la forme ou la nature (stratifiés, mélaminés, bois, plastiques, plâtre, fibre de verre, céramique, béton, mousses, porcelaine, verre et métal), en en épousant tous les détails.

Ce véritable matériau composite est disponible aujourd'hui en plusieurs variétés qui permettent de résoudre les nombreux problèmes de mise en œuvre du métal massif.

Ainsi, des objets qui seraient trop lourds à réaliser en métal massif, trop chers, ou impliquant des techniques trop contraignantes pour réaliser des détails fins, peuvent être métallisés très rapidement et ne représenter qu'une fraction de poids et du prix. Chaque composite est formé de granulats micronisés de métal, d'un liant polymère hybride et d'un catalyseur. Le métal et le liant polymère interagissent dans une réaction chimique créant un composite extrêmement stable et homogène. Après catalyse, le polymère et le métal se lient chimiquement en produisant une adhérence très forte entre le composite ainsi formé et le support. Le composite s'applique tant aux métaux et alliages « rouges » que « gris» : le cuivre (composé à 99% de cuivre pur) et ses alliages tels que le bronze (composé en très grande majorité de cuivre allié à l'étain), le laiton (alliage principalement de cuivre et zinc), le « nickel-silver » (Argentan - alliage de cuivre, nickel et zinc) ; ou le fer (composé de fer pur), l'aluminium (composé d'aluminium pur), le « X-Metal » (alliage de cuivre et d'étain à parts égales), l'inox (alliage principalement constitué de fer, de chrome et de nickel), le « canon de fusil » (alliage de cuivre, étain et argent), l'étain ou un composé d'étain et d'argent, etc. Cette gamme s' enrichit régulièrement de nouveaux métaux.

La technologie de métallisation à froid se fait typiquement au moyen d'un équipement de peinture au pistolet conventionnel. Les métaux composites sont pulvérisés à froid au moyen d'un pistolet HVLP (haut volume / basse pression) avec des buses adaptées. Récemment, la Demanderesse a montré que les composites de cuivre issus de cette technologie sont très bien adaptés pour les revêtements de type « antifouling » dans le domaine nautique (cf. par exemple article paru dans « Moteur Boat Magazine », n° 282 Juin 2013, page 133-137 ;), en particulier des composites de cuivre oxydés et/ou phosphorés ont été identifiés (FR1357099, FR1400766, et PCT / EP2014 065 498). Toutefois, la Demanderesse s'était aperçue que pour pouvoir réaliser de tels composites, il était nécessaire que la poudre de cuivre oxydée et/ou phosphorée (telle que $CuP_8$) ne soit pas trop fine, sinon le composite n'était pas réalisable.

De manière surprenante, la Demanderesse s'est aperçue que des poudres de cuivre (par exemple oxydés et/ou phosphorés) présentant de telles granulométries peuvent être incorporés dans des composites souples permettant ainsi de mouler des objets originaux. Dans le cas des composites de poudre de cuivre par exemple, les propriétés biocides généré par le cuivre trouvent une application directe dans un grand nombre de domaines techniques, tel que l'agroalimentaire, l'industrie du médicament, ou le domaine de la santé. Quelques essais avec d'autres poudres métalliques que le cuivre ont validé le concept de manière générale. En outre, il est possible par le procédé mis au point par la Demanderesse d'incorporer des fibres tissés ou non tissés dans ces composites souples permettant de structurer l'objet composite et ainsi d'envisager une large gamme d'application supplémentaires.

En outre, la granulométrie et la nature particulière des poudres métalliques permet d'obtenir des effets esthétiques très intéressants : par exemple le matériau souple obtenu peut présenter toute les caractéristiques visuelles d'un métal mais avec une souplesse déconcertante. En outre, la possibilité de moduler la nature de la poudre ajoutée au polymère permet d'en faire varier les teintes, la couleur ou la brillance tout en bénéficiant d'une souplesse qui permet dans certains cas d'obtenir un confort de contact appréciable (prise en main et/ou isolation thermique et/ou électrique).

RESUME DE L'INVENTION

L'objet de la présente invention concerne un composite (solide) polymérique comprenant:

- un liant, de type élastomère,
- une poudre métallique, de cuivre et/ou comprenant 30% en masse de grains avec un diamètre supérieur à 45μm, dispersée dans le liant; caractérisé en ce que ledit composite a un module de Young (E) inférieur à 1 GPa.

L'objet de la présente invention concerne également un procédé de fabrication d'un composite (solide) tel que présentement décrit caractérisé par les étapes :

- (a) mélange d'un précurseur du liant à l'état liquide avec la poudre métallique ;
- (b) coulée du mélange obtenu à l'étape (a) dans un moule ;
- (c) solidification du mélange de l'étape (b), préférentiellement par une variation de température ou par l'ajout d'un catalyseur ; et
- (d) démoulage du composite figé.

L'objet de la présente invention concerne en outre tout objet comprenant le composite tel que décrit ci-dessus et en particulier un film, préférentiellement thermo-rétractable, un textile, préférentiellement en rouleau, un rideau, un manchon tel qu'un manchon de poignée de porte, un vêtement ou partie d'un vêtement, un sac, une poche, une bâche, un bac, ou une nappe comprenant un composite tel que décrit présentement.

L'objet de la présente invention concerne de plus l'utilisation d'un film ou d'un textile tel que décrit présentement dans un procédé de thermoformage.

DEFINITIONS

*Composite*

Un composite est une combinaison de deux matériaux de natures différentes. Dans le présent cas de figure, il s'agit de la combinaison d'un liant avec une poudre métallique, i.e. des particules d'une poudre métallique dans une matrice organique ou inorganique souple, figée (solide) qui aura été solidifiée à l'aide d'un catalyseur de prise ou un traitement physico-chimique (lumière/température). Le composite selon l'invention peut ainsi être utilisé avant qu'il soit figé, pour mouler des objets divers et variés.

*Agent liant*

Un agent liant (encore dit simplement « liant ») selon la présente invention concerne un produit qui lie les molécules d'un élément à un autre élément, lors de la fusion (généralement à froid) de matériaux. Par exemple, dans le présent cas de figure, un agent liant va permettre d'agglomérer les particules de poudre dans une matrice figée, plus ou moins souple, préférentiellment souple, polymérique.

La matrice de liant assure la cohésion des particules et elle permet également de transmettre les sollicitations auxquelles sont soumises les pièces.

Le liant selon l'invention peut être un élastomère, particulièrement un élastomère thermoplastique.

Le liant selon l'invention peut être un élastomère, particulièrement un élastomère thermdurcissable.

Le liant selon l'invention peut être un élastomère, particulièrement un élastomère thermoplastique ou thermodurcissable.

Un élastomère thermoplastique (TPE) représente une famille de copolymères (souvent à blocs) ou de mélanges mécaniques de polymères (mélanges « polymère-polymère », souvent un polymère thermoplastique et un élastomère) dont les membres combinent les propriétés élastiques des élastomères et le caractère thermoplastique (ils fondent et durcissent, de manière réversible, sous l'action de la chaleur).Ce dernier caractère leur confère un moulage plus aisé, ce qui permet au transformateur l'utilisation des procédés de mise en forme des polymères thermoplastiques (injection, extrusion, soufflage ou surmoulage).

La liant selon l'invention peut être élastomère thermoducissable.

La matrice de liant a pour rôle de lier particules, répartir les contraintes encaissées, apporter latenue chimique de la structure et donner la forme désirée au produit.

Le liant peut être choisi parmi les résines thermodurcissables (TD) mais l'emploi de polymères thermoplastiques (TP) est aussi possible.

La structure des TP se présente sous forme de chaînes linéaires, il faut les chauffer pour les mettre en forme (les chaînes se plient alors), et les refroidir pour les fixer (les chaînes se bloquent). Cette opération est réversible.

La structure des TD a la forme d'un réseau tridimensionnel qui se ponte (double liaison de polymérisation) pour durcir en forme de façon définitive. La transformation est donc irréversible.

Un liant tel qu'une résine TD est issue d'un monomère qui est réticulé à température ambiante par addition d'un catalyseur de type desprise et éventuellement d'un accélérateur. Elle passe successivement de l'état liquide visqueux initial à l'état de gel, puis à l'état de solide infusible.

La réaction est exothermique et la température de la résine augmente progressivement depuis le gel jusqu'à un maximum pour redescendre ensuite lentement à la température ambiante.

Le durcissement sera d'autant plus rapide ou, si l'on préfère, le temps nécessaire dans le moule sera d'autant plus court que la courbe de température en fonction du temps se rapprochera davantage de la verticale.

La réaction de durcissement dépend de la réactivité de la résine, de la forme de l'objet fabriqué (épaisseur, etc.), de la nature et du dosage du système catalytique.

Pour les liants thermoplastiques on peut utiliser des polymères qui sont essentiellement des polymère thermoplastiques techniques qui présentent à l'état vierge de bonnes caractéristiques mécaniques et confèrent, à température ambiante, une tenue thermique et mécanique améliorée au produit selon l'invention ainsi une bonne stabilité dimensionnelle.

On peut citer ceux qui ont une tenue en température supérieure à 100°C: polyamide, polytéréphtalate éthylénique et butylénique, polycarbonate, polysulfure de phénylène ,polyoxyméthylène et polypropylène.

On peut aussi utiliser des thermoplastiques thermostables (tenue en température > 200 °C et bonnes propriétés mécaniques), en particulier polyamide-imide, polyéther-imide, polyéther-sulfone ou polyéther-éther-cétone par exemple.

*Catalyseur de prise*

Le catalyseur de prise permet l'accélération, voire la faisabilité, de la polymérisation en une matrice souple, figée. Le catalyseur peut être remplacé par un traitement thermique. Le polymère est souvent préparé par réticulation. La structure tridimensionnelle (réseau) formée, stable, présente typiquement une résistance thermomécanique et chimique.

*Elastomère*

Un élastomère est un polymère présentant des propriétés « élastiques », par exemple obtenues après réticulation. La plupart des élastomères sont des polymères organiques. Les élastomères silicone, par exemple, se distinguent par leur nature minérale. La loi de Hooke est la loi qui traite l'élasticité d'un corps : l'allongement d'un corps est proportionnelle à la force exercée sur celui-ci et détermine donc le comportement des solides soumis à des déformations :

$$\sigma = E.\varepsilon$$

$\sigma$ est la contrainte (unité de pression)

$\varepsilon$ est la déformation de l'objet (en pourcentage)

E est le module de Young

Les composites selon la présente invention peuvent présenter des valeurs de $\varepsilon$ supérieures à 2%, 5%, 10%, 20%, 30%, 40%, 50%, 60%, 70%, 80%, 90%, 100%, 150%, 200%, 500%, 1000%. Les composites selon la présente invention peuvent présenter des valeurs de $\varepsilon$ inférieures à 5000%, 4000%, 3000%, 2000%, 1000%, 500%, 200%, 150%, 100%, 50%, 40%, 30%, 20%, 10%, 5%, 2% en particulier lorsqu'il s'agit d'un mode de réalisation avec une trame tissée ou non tissée. Typiquement, les composites selon la présente invention peuvent présenter des valeurs de $\varepsilon$ comprises entre 2% et 5000%, 10% et 1000%, 50% et 500%, ou encore, entre 70% et 100%.

Les composites selon la présente invention peuvent être synthétiques ou naturels, tels que des élastomères de silicone ou de caoutchouc naturel, par exemple (cf. plus loin).

*Module de Young*

Le module de Young est une caractéristique classique de mesure permettant de définir la souplesse/rigidité d'un matériau. Le module de Young est mesuré en Pascal (Pa). Plus la valeur de ce module est élevé, et plus le matériau est rigide. Les différentes techniques de mesures de ce module sont bien connues de l'homme de l'art.

*Poudre*

De manière générale, la poudre est un état fractionné de la matière. Il s'agit ainsi d'une pluralité d'unités (ou morceaux/granules) de matière(s) solide(s) de taille généralement inférieure au dixième de millimètre (100 $\mu$m) qui constituent ensemble une « collection ». Une poudre est caractérisée en termes de propriétés physiques par sa granulométrie.

*Granulométrie*

La granulométrie est de manière générale l'étude de la distribution statistique des tailles d'une pluralité d'unités (ou morceaux/granules) solide(s) de matière naturelle ou fractionnée (c'est à dire une collection). L'analyse granulométrique est l'ensemble des opérations permettant de déterminer la distribution des tailles des éléments composant une poudre. La distribution granulométrique est la représentation sous forme de tables de nombres ou de graphiques des résultats expérimentaux de l'analyse granulométrique.

*Poudre de cuivre oxydée*

Par « poudre de cuivre oxydée », il est compris selon la présente invention d'une part que la poudre a les caractéristiques granulométriques définies présentement (permettant son incorporation dans un liant) et d'autre part que la poudre a une teneur en cuivre oxydé supérieure ou égale à 5% en masse de la masse totale de cuivre dans la poudre préférentiellement supérieure ou égale 10%, 20%, 30%, 40%, 50%, 60%, 70%, 80%, 90%, 95%, 99% ou 100% en masse de la masse totale de cuivre dans la poudre.

En outre dans les essais réalisés, l'oxydation du cuivre (et/ou de ses alliages) avant son incorporation dans le composite a permis d'obtenir un composite d'un noir profond (plutôt esthétique) qui perdure dans le temps.

*Cuivre métallique*

Par « cuivre métallique » selon la présente invention, il est compris le cuivre « $Cu^0$ ». Toutefois, par « poudre métallique », selon la présente invention, il est compris toute poudre comprenant un métal (selon n'importe quelle forme : non oxydé, oxydé, réduit, complexé, etc...), préférentiellement avec les caractéristiques granulométriques définies présentement.

*Poudre de cuivre phosphorée*

Par « poudre de cuivre phosphorée », il est compris selon la présente invention d'une part que la poudre a les caractéristiques granulométriques définies présentement (permettant son incorporation dans un liant) et d'autre part que la poudre a une teneur en phosphore comprise entre 2 et 16% en masse, préférablement 8%. De manière préférée, la poudre de cuivre phosphorée consiste en un alliage de cuivre et de phosphore, préférentiellement $CuP_8$, préférentiellement à une teneur en cuivre :phosphore en pourcentage en masse égale ou supérieure à 84 :16%, 85 : 15%, 86 :14%, 87 : 13%, 88 : 12%, 89 : 11%, 90 : 10%, 91 : 9%, 92 : 8%, 93 : 7%, 94 : 6%, 95 : 5%, 96 : 4%, 97 : 3%, 98 : 2%, 99 : 1%, plus préférentiellement supérieure ou égale de 92 : 8%. De manière préférée, la poudre comprenant du cuivre-phosphoré comprend comme élément majoritaire dans sa composition du $CuP_8$, ou consiste en du $CuP_8$, pouvant par exemple être compris à une teneur égale ou supérieure à 50%, 60%, 70%, 80%, 90%, 95%, 99% en masse totale de poudre.

La poudre de $CuP_8$ dans le composite permet de stabiliser dans le temps la couleur du composite de cuivre (qui s'oxyde à l'air). $CuP_8$ est couramment utilisé dans des techniques de soudure. Toutefois, lorsque la poudre de $CuP_8$ est utilisée dans un composite selon la présente invention, les composites souple obtenus présentent des caractéristiques esthétiques exceptionnelles (couleur anthracite) qui perdurent dans le temps. Ceci est particulièrement surprenant car $CuP_8$ à l'état de poudre est de couleur grise et c'est seulement lorsqu'il est incorporé dans le composite qu'il présente cette couleur noire anthracite qui ne présente pas en outre les effets néfastes esthétiquement de son oxydation superficielle.

*Biocide*

La définition du terme « biocide » selon la présente invention rejoint celle de la Directive du Parlement européen et du Conseil n° 98/8/CE du 16 février 1998 concernant la mise sur le marché des produits biocides (JOCE n° L 123 du 24 avril 1998) qui les définit comme étant « Les substances actives et les préparations contenant une ou plusieurs substances actives qui sont présentées sous la forme dans laquelle elles sont livrées à l'utilisateur, qui sont destinées à détruire, repousser ou rendre inoffensifs les organismes nuisibles, à en prévenir l'action ou à les combattre de toute autre manière, par une action chimique ou biologique ».

*Température ambiante*

La température ambiante est celle généralement admise comme comprise entre 15 et 30°C, préférentiellement entre 20 et 25°C.

*Moulage*

Les composites selon la présente invention sont en outre utilisés pour mouler des objets. La technique du moulage consiste à prendre une empreinte qui servira ensuite de moule. Selon la présente invention, le moulage consiste donc à placer un composite dans un moule, dont il prendra la forme puis de l'en retirer une fois figé. L'objet obtenu de ce moulage peut être creux ou rempli du composite ou d'un autre matériau, tel qu'un polymère sans poudre métallique par exemple.

*Oxydation à cœur*

Par « oxydation à cœur », il est compris selon la présente invention, que les grains de la poudre de cuivre oxydée sont oxydés à la fois en surface et au centre des grains qui composent ladite poudre. Le taux d'oxydation peut néanmoins varier selon une ligne droite qui irait de la surface du grain au centre (c'est-à-dire centre de gravité) du grain. Typiquement la surface du grain est plus oxydée que ne l'est le centre de par la plus grande entropie que la surface présente. Avantageusement le centre présente un taux d'oxydation qui est 50% en masse inférieure à celui de la surface, plus avantageusement encore le centre présente un taux d'oxydation qui est 25% en masse inférieure à celui de la surface, encore plus avantageusement le centre présente un taux d'oxydation qui est 10% en masse inférieure à celui de la surface, plus avantageusement que cela le centre présente un taux d'oxydation qui est 5% en masse inférieure à celui de la surface, de manière la plus avantageuse le centre présente un taux d'oxydation qui est identique à celui de la surface.

*Taux d'oxydation*

De manière générale, l'oxydation implique une perte d'électrons de l'entité oxydée. Dans la présente invention, ceci se traduit par la mise en réaction d'oxygène avec le cuivre dans la poudre. Par exemple dans le cas où la poudre ne contient initialement que du cuivre, le « taux d'oxydation » selon la présente invention fait alors référence à la quantité massique initiale de cuivre à l'état d'oxydation zéro (« $Cu^0$ » dit aussi « cuivre métallique » dans le cadre de la présente invention) qui est oxydé en CuO, soit le cuivre est à l'état d'oxydation +2. De manière générale le taux d'oxydation fait donc référence à la quantité de cuivre qui est oxydé et représente donc un ratio de quantités (masse, mole) du cuivre qui est engagé dans la réaction d'oxydation.

De manière générale selon la présente invention, la quantité de cuivre étant prépondérante, par mesure de praticité, il est fait référence par approximation à des taux massiques. En toute rigueur, il s'agirait de taux molaires.

*Pigment*

Dans le cadre de la présente invention, par « pigment » il est compris une substance colorante insoluble dans la matrice du matériau qui le contienne. Préférentiellement le pigment est une substance colorante de composite c'est-à-dire pour teinter dans la masse un composite comprenant un agent liant et éventuellement un catalyseur de prise. De manière préférée les pigments selon la présente invention permettent d'obtenir des composites souples de couleurs métalliques ou noires, anthracites, ou noire avec des légers reflets bruns, ou encore brun foncé selon la nature et la concentration du pigment (poudre).

*Plastique*

Dans le cadre de la présente invention, par « plastique » il est compris (comme cela est généralement admis dans l'art) un matériau issu de composé fossile de type polymère pouvant être initialement (sans poudre selon la présente invention) transparent ou opaque. Typiquement, les matières plastiques sont issues de produits dits « intermédiaires » hydrocarbonés, tels que l'éthylène, propylène, acétylène, benzène, etc. dont les matières premières sont le pétrole, le gaz naturel et le charbon.

*Latex*

Dans le cadre de la présente invention, par « latex » il est compris un matériau élastique élaboré à partir de la sève de l'hévéa, ou synthétisé par polymérisation (comme cela est généralement admis dans l'art). Le caoutchouc est un matériau pouvant être obtenu soit par la transformation du latex sécrété et extrait directement de certains végétaux (par exemple, l'hévéa), soit de façon synthétique à partir de monomères issus de combustibles fossiles. Par exemple, le caoutchouc naturel (sigle NR, Natural Rubber) est un polyisoprénoïde. Les définitions de latex et caoutchouc sont celles communément admises dans l'art.

*Nylon®*

Le Nylon® est le nom du matériau de type polyamide, souvent utilisé comme fibre textile. La définition de Nylon® est celle communément admise dans l'art.

*Film*

Dans le cadre de la présente invention, par «film» il est compris une pellicule de composite, pouvant être transparente opaque, étirable ou pas, ductile ou pas. Préférentiellement l'épaisseur d'un film selon la présente invention est inférieur à 5 cm, et peut être comprise entre 0,01mm à 2 cm, 0,1mm à 1 cm, 1mm à 1 cm, ou encore entre 2mm à 5mm. Un film de composite selon la présente invention peut être recouvert intégralement ou partiellement d'une couche adhésive, lui permettant ainsi d'être utilisé en tant que revêtement. En outre un film de composite selon la présente invention peut être utilisé pour confectionner par moulage et/ou thermoformage d'autres objets, en particulier creux et pouvant être remplis par la suite, tels que des poches pour liquides.

*Précurseur du liant*

Dans le cadre de la présente invention, par « précurseur de liant », il est compris le liant sous forme liquide n'ayant pas encore été figé (e.g. par catalyse chimique ou physique) pour produire le composite selon la présente invention.

*Support ou structure de renfort*

Dans le cadre de la présente invention, par « support » il est compris tout matériau utilisé comme base sur laquelle le composite de l'invention est déposé et forme ainsi au moins partiellement un bicouche. Dans le cadre de la présente invention, par « structure de renfort » il est compris tout matériau pouvant être au moins partiellement noyé dans le composite selon la présente invention. « Support » et « structure de renfort » peuvent être de toute nature, par exemple organique ou inorganiques, tels que des polyesters, silicones ou des objets d'épaisseur faible de métaux (feuille d'aluminium par exemple). « Support » et « structure de renfort » peuvent être des trames tissées ou non tissées en fibres naturelles ou synthétique, tels que des fibres métalliques, de coton, de polyester, etc., de forme / taille de maille variables.

## DESCRIPTION DETAILLEE

Un facteur qu'il convient de prendre en compte dans le cadre de la présente invention est la granulométrie de la poudre. En effet, lorsqu'il s'agit d'une poudre de cuivre, la granulométrie de la poudre de cuivre selon la présente invention va être déterminante afin de réaliser le composite souple avec l'agent liant. En effet pour certaines poudres, si la poudre est trop fine, le composite ne se forme pas correctement est présente des propriétés physico-chimiques inacceptables.

Ainsi, de manière générale, il semble qu'il y ait un seuil qui se situe vers 30% en masse de grains de poudre par rapport à la quantité totale de poudre dont le diamètre doit être supérieur à $45\mu$m pour que le revêtement/composite final puisse être fabriqué.

Toutes les valeurs de granulométrie décrites présentement sont applicables aux autres métaux. Toutefois, il n'est pas exclu que pour certains métaux que cette granulométrie ne soit pas un facteur limitatif et l'utilisation de poudres plus fines puissent être utilisées avec succès (par des effets physico-chimiques additionnels - polarité, présence de charges permettant l'incorporation, etc).

Ainsi, la poudre métallique (préférentiellement de cuivre) peut contenir plus de 40%, 50%, 75%, 90%, 95%, 100% en masse de grains dont le diamètre est supérieur à $45\mu$m.

En outre, il semble important dans certains modes de réalisations de la présente invention qu'au moins une proportion, même très faible, de la poudre ait un diamètre inférieur à $45\mu$m (e.g. afin d'obtenir une continuité de l'aspect métallique dans le composite). Ainsi, dans un mode réalisation particulier, la poudre métallique, préférentiellement de cuivre ($Cu^0$, oxydé, phosphoré), ne contient pas plus de 70%, 50%, 25%, 10%, 5%, 2% ou 1% en masse de grains dont le diamètre est inférieur à $45\mu$m.

Ces modes de réalisations particuliers dans lesquels sont définis la quantité maximale de grains dont le diamètre est inférieur à $45\mu$m peuvent être individuellement combinées à des gammes de quantité minimale de grains dont le diamètre est inférieur à $63 \mu$m au maximum dans la composition de poudre métallique, préférentiellement de cuivre ($Cu^0$, oxydé, phosphoré), selon la présente invention. Ainsi, la poudre métallique contient au moins 1%, 5%, 10%, 25%, 50%, 75%, 90% ou 95% en masse de grains dont le diamètre est inférieur à $63 \mu$m.

Dans un mode de réalisation de la présente invention, les grains de poudre sont tous inférieurs en diamètre à $500\mu m$. Avantageusement, les grains de poudre sont tous inférieurs en diamètre à $250\mu m$, $200\mu m$, $150\mu m$, $100\mu m$, $90\mu m$, $80\mu m$, $70\mu m$ ou $60\mu m$. Ainsi, plus particulièrement, l'objet de la présente invention concerne une composition de poudre métallique, préférentiellement de cuivre ($Cu^0$, oxydé, phosphoré), telle que définie ci-dessus dans laquelle la granulométrie présente des caractéristiques spécifiques qui sont détaillées ci-dessous.

Selon un mode de réalisation particulier de l'invention, la poudre contient des grains de diamètres D suivants :

| | |
|---|---|
| $1 \pm 1\%$ en masse de grains de diamètre D1 : | $125\mu m \leq D1$ |
| $2 \pm 2\%$ en masse de grains de diamètre D2 : | $106\mu m \leq D2 < 125\mu m$ |
| $12 \pm 10\%$ en masse de grains de diamètre D3 : | $75\mu m \leq 03 < 106\mu m$ |
| $10 \pm 5\%$ en masse de grains de diamètre D5 : | $63\mu m \leq 05 < 75\mu m$ |
| $20 \pm 10\%$ en masse de grains de diamètre D6 : | $45\mu m \leq 06 < 63\mu m$ |
| $40 \pm 30\%$ en masse de grains de diamètre D7 : | $D7 \leq 45\mu m$ |

Selon un mode de réalisation avantageux de l'invention, la poudre contient des grains de diamètres D suivants :

| | |
|---|---|
| $1 \pm 1\%$ en masse de grains de diamètre D1 : | $125\mu m \leq D1$ |
| $2 \pm 2\%$ en masse de grains de diamètre D2 : | $106\mu m \leq D2 < 125\mu m$ |
| $5 \pm 5\%$ en masse de grains de diamètre D3 : | $90\mu m \leq 03 < 106\mu m$ |
| $7 \pm 5\%$ en masse de grains de diamètre D4 : | $75\mu m \leq 04 < 90\mu m$ |
| $10 \pm 5\%$ en masse de grains de diamètre D5 : | $63\mu m \leq 05 < 75\mu m$ |
| $20 \pm 10\%$ en masse de grains de diamètre D6 : | $45\mu m \leq 06 < 63\mu m$ |
| $40 \pm 30\%$ en masse de grains de diamètre D7 : | $D7 \leq 45\mu m$ |

Selon un mode de réalisation avantageux de l'invention, la poudre contient des grains de diamètres D suivants :

| | |
|---|---|
| $1 \pm 0,5\%$ en masse de grains de diamètre D1 : | $125\mu m \leq D1$ |
| $2 \pm 1\%$ en masse de grains de diamètre D2 : | $106\mu m \leq D2 < 125\mu m$ |
| $5 \pm 2\%$ en masse de grains de diamètre D3 : | $90\mu m \leq 03 < 106\mu m$ |
| $7 \pm 2\%$ en masse de grains de diamètre D4 : | $75\mu m \leq 04 < 90\mu m$ |
| $10 \pm 3\%$ en masse de grains de diamètre D5 : | $63\mu m \leq 05 < 75\mu m$ |
| $20 \pm 5\%$ en masse de grains de diamètre D6 : | $45\mu m \leq 06 < 63\mu m$ |
| $50 \pm 20\%$ en masse de grains de diamètre D7 : | $D7 \leq 45\mu m$ |

Selon un mode de réalisation plus avantageux de l'invention, la poudre contient des grains de diamètres D suivants :

| | |
|---|---|
| $0,9 \pm 0,1\%$ en masse de grains de diamètre D1 : | $125\mu m \leq D1$ |
| $1,5 \pm 0.5\%$ en masse de grains de diamètre D2 : | $106\mu m \leq D2 < 125\mu m$ |
| $4,5 \pm 1\%$ en masse de grains de diamètre D3 : | $90\mu m \leq 03 < 106\mu m$ |
| $6,5 \pm 1\%$ en masse de grains de diamètre D4 : | $75\mu m \leq 04 < 90\mu m$ |
| $8,5 \pm 1\%$ en masse de grains de diamètre D5 : | $63\mu m \leq 05 < 75\mu m$ |
| $18 \pm 5\%$ en masse de grains de diamètre D6 : | $45\mu m \leq 06 < 63\mu m$ |
| $60 \pm 10\%$ en masse de grains de diamètre D7 : | $D7 \leq 45\mu m$ |

Selon un mode de réalisation plus avantageux de l'invention, la poudre contient des grains de diamètres D suivants :

| | |
|---|---|
| $0,9 \pm 0,1\%$ en masse de grains de diamètre D1 : | $125\mu m \leq D1$ |
| $1,5 \pm 0.5\%$ en masse de grains de diamètre D2 : | $106\mu m \leq D2 < 125\mu m$ |
| $4,5 \pm 1\%$ en masse de grains de diamètre D3 : | $90\mu m \leq 03 < 106\mu m$ |
| $6,5 \pm 1\%$ en masse de grains de diamètre D4 : | $75\mu m \leq 04 < 90\mu m$ |
| $8,5 \pm 1\%$ en masse de grains de diamètre D5 : | $63\mu m \leq 05 < 75\mu m$ |

(suite)

18 ± 5% en masse de grains de diamètre D6 :  45µm≤06<63µm

60 ± 5% en masse de grains de diamètre D7 :  D7≤45µm

Selon un mode de réalisation encore plus avantageux de l'invention, la poudre contient des grains de diamètres D suivants :

0,9 % en masse de grains de diamètre D1 :  125µm≤D1

1,5 % en masse de grains de diamètre D2 :  106µm≤D2<125µm

4,5 % en masse de grains de diamètre D3 :  90µm≤03<106µm

6,6 % en masse de grains de diamètre D4 :  75µm≤04<90µm

8,4 % en masse de grains de diamètre D5 :  63µm≤05<75µm

20,8 % en masse de grains de diamètre D6 :  45µm≤06<63µm

58,8 % en masse de grains de diamètre D7 :  D7≤45µm

Selon un mode de réalisation avantageux de l'invention, la poudre contient des grains de diamètres D suivants :

1,0 % en masse de grains de diamètre D2 :  106µm≤D2

8,1 % en masse de grains de diamètre D3' :  75µm≤D3'<106µm

7,9 % en masse de grains de diamètre D5 :  63µm≤D5<75µm

19,2 % en masse de grains de diamètre D6 :  45µm≤D6<63µm

63,8 % en masse de grains de diamètre D7 :  D7≤45um

De manière classique, les pourcentages massiques sont additionnés pour avoir une granulométrie cumulative selon la norme ISO 4497. Il est facile pour l'homme du métier au vu des gammes données ci-dessus de simplement additionner les valeurs pour retrouver les normes actuelles de granulométrie (cumulative).

Comme précédemment dit, ces valeurs de granulométrie sont indépendantes de la nature chimique de la poudre, et permettent simplement l'incorporation des poudres dans un liant. Toutefois, des variations d'effets techniques particuliers (biocidie, pigmentation) peuvent être obtenues selon la finesse de la poudre.

Plus particulièrement, l'objet de la présente invention concerne un composite tel que décrit ci-dessus caractérisé en ce que le module de Young (E) est inférieur à 1 GPa, préférentiellement inférieur à 0.5 GPa, 0,4 GPa, 0,3 GPa, ou 0,2 GPa.

De manière avantageuse, le composite tel que décrit ci-dessus est caractérisé en ce que le module de Young (E) est inférieur à 0,9 GPa, 0,8 GPa, 0,7 GP.

De manière avantageuse, le composite tel que décrit ci-dessus est caractérisé en ce que le module de Young (E) est inférieur à 0,1 GPa, 0,09 GPa, 0,08 GPa, 0,07 GPa, 0,06 GPa 0,05 GPa, 0,04 GPa, 0,03 GPa, 0,02 GPa, 0,01 GPa.

De manière plus avantageuse, le composite tel que décrit ci-dessus est caractérisé en ce que le module de Young (E) est compris entre 0,001 et 5 GPa, 0,005 et 4 Gpa, 0,01 et 3 GPa, 0,05 et 2 GPa, 0,1 et 1 GPa, 0,2 et 0,7 GPa ou entre 0,3 et 0,5 GPa.

De manière plus avantageuse, le composite tel que décrit ci-dessus est caractérisé en ce que le module de Young (E) est équivalent à celui du caoutchouc, c'est-à-dire compris entre 0,001 et 0,1 GPa, équivalent à celui du polyéthylène, c'est-à-dire compris entre 0,2 et 0,7 Gpa, équivalent à celui du polystyrène, c'est-à-dire compris entre 3 et 3,4 GPa, équivalent à celui du Nylon®, c'est-à-dire compris entre 2 et 5 GPa, en particulier entre 2,5 et 4 GPa.

Le module d'Young du composite selon l'invention est évalué à température ambiante, soit environs 20°C et les valeurs indiquées ci-avant correspondent à cette température. Ainsi, le composite selon la présente invention est caractérisé en ce que le liant est un liant organique ou inorganique, ou un mélange des deux.

De manière avantageuse, le composite selon la présente invention est caractérisé en ce que le liant est choisi parmi un plastique, un latex, un caoutchouc, un polyéthylène, le polypropylène, le polyuréthane, un polymère époxy, le vinyle ester, les polymères en phase aqueuse, les nylons®, les polyamides,les polycarbonates, les polystyrènes, le polyméthacrylate de méthyle, un polymère de silice tel qu'un silicone, les polydiméthylsiloxanes, les polythiazyles, les polysilanes, les polygermanes, plus préférentiellement un polymère de silice. De manière avantageuse, il s'agit d'un liant élastomère telle que défini ci-dessus, en particulier avec des valeurs d'élasticité telles que décrites ci-dessus. En effet, dans les modes de réalisations de la présente invention, l'élasticité du polymère initial (sans poudre) n'est que très peu altérée par l'ajout de poudre métallique, en particulier aux proportions (poudre/liant) décrites plus loin.

De manière plus avantageuse, le composite selon la présente invention est caractérisé en ce que le liant est choisi parmi un plastique, un latex, un caoutchouc, un polyéthylène, le polyuréthane, un polymère époxy, les polymères en phase aqueuse, les Nylons®, les polyamides, un polymère de silice tel qu'un silicone, les polydiméthylsiloxanes, les polythiazyles, les polysilanes, les polygermanes.

De manière encore plus avantageuse, le composite selon la présente invention est caractérisé en ce que le liant est choisi parmi un latex, un caoutchouc, un polyéthylène, le polyuréthane, les Nylons®, les polyamides, un polymère de silice tel qu'un silicone, les polydiméthylsiloxanes, les polythiazyles, les polysilanes, les polygermanes.

De manière plus avantageuse, le composite selon la présente invention est caractérisé en ce que la poudre comprend au moins un métal choisi parmi le magnésium, l'étain, le technétium, le rhénium, le titane, le fer, le chrome, le cobalt, l'or, le zinc, le platine, le cadmium, l'aluminium, le nickel, l'argent, le béryllium, le calcium et le strontium.

De manière encore plus avantageuse le composite selon la présente invention est caractérisé en ce que la poudre comprend du cuivre $Cu^0$, oxydé ou phosphoré, préférentiellement comprise à un taux allant de 60% jusqu'à 100% en masse de la poudre métallique.

Plus particulièrement, l'objet de la présente invention comprend une composition de poudre de cuivre $Cu^0$, oxydé et/ou phosphoré telle que définie ci-dessus dans laquelle la masse cuivre est supérieure ou égale à 65%, avantageusement supérieure à 70%, plus avantageusement supérieure à 75%, plus avantageusement encore supérieure à 80%, encore plus avantageusement supérieure à 85%, encore plus avantageusement supérieure à 90%, encore plus avantageusement supérieure à 95%, encore plus avantageusement supérieure à 97%, encore plus avantageusement supérieure à 98%, encore plus avantageusement supérieure à 99%, encore plus avantageusement supérieure à 99,5%, encore plus avantageusement supérieure à 99,9% en masse en comparaison avec la masse totale de la composition de poudre.

En ce qui concerne la densité des poudres utilisées, de manière générale, celle-ci est comprise entre 1 et 5 g/cm$^3$, plus particulièrement entre 1,5 et 3 g/cm$^3$, entre 1,5 et 2 g/cm$^3$, entre 2 et 3 g/cm$^3$, entre 2 et 2,5 g/cm$^3$, entre 2,5 et 3 g/cm$^3$. La densité va dépendre à la fois de la granulométrie et de la nature chimique de la poudre, par exemple de son degré d'oxydation.

Avantageusement, le composite selon la présente invention est caractérisé en ce que le taux d'oxydation du cuivre est supérieur à 95% en masse de cuivre oxydé vis-à-vis de la masse totale de cuivre dans la poudre.

Préférentiellement, la composition de cuivre oxydée selon la présente invention est caractérisée en ce que les grains de cuivre sont oxydés à cœur.

La composition de cuivre oxydé selon la présente invention est caractérisée en ce que le cuivre est oxydé à divers taux, par exemple, la composition de cuivre oxydée peut être oxydée à 5%, 10%, 15, 20%, 25%, 30%, 35%, 40%, 45%, 50%, 55%, 60%, 65%, 70%, 75%, 80%, 85%, 90% ou 95% en masse de cuivre oxydé vis-à-vis de la masse totale de cuivre.

Ce degré d'oxydation permet d'ajuster l'activité biocide du composite de la présente invention.

Selon un mode de réalisation de la présente invention, la composition de cuivre oxydée incorporée dans le composite selon la présente invention est caractérisée en ce que le taux d'oxydation du cuivre est supérieur à 95 % en masse de cuivre oxydé vis-à-vis de la masse totale de cuivre et/ou que la quantité de phosphore est comprise entre 2 et 16%, préférentiellement 8% en masse vis-à-vis de la masse totale de poudre.

Par exemple, selon un mode de réalisation de la présente invention, la composition de cuivre oxydée incorporée dans le composite selon la présente invention est caractérisée en ce que le taux d'oxydation du cuivre est de 95,5 %, 96%, 96,5%, 97%, 97,5%, 98%, 98,5%, 99%, 99,5%, 99,7%, 99,8%, 99,9% ou 100% en masse de cuivre oxydé vis-à-vis de la masse totale de cuivre.

En outre, les techniques de détermination du taux de cuivre sont extrêmement communes dans l'art et peuvent être faites par voies chimiques et/ou physiques.

Avantageusement, le composite selon la présente invention est caractérisé en ce que la poudre métallique comprend au moins un composé inorganique non métallique tel que l'azote, l'oxygène, le phosphore, le soufre, le fluor, le chlore, le brome, le carbone, le silicium.

Avantageusement, le composite selon la présente invention est caractérisée en ce que le composite comprend une proportion en masse de poudre / liant comprise de 1/2 à 2/1 respectivement, préférentiellement de 1,2/1 à 1,6/1 respectivement. Par exemple le composite de poudre métallique et de l'agent liant tel que défini ci-dessus est caractérisé en ce que la proportion en masse de la composition en poudre / liant est comprise de 1,1/1 à 1,8/1 respectivement, de 1,15/1 à 1,6/1 respectivement, de 1,2/1 à 1,4/1 respectivement, de 1,25/1 à 1,3/1 respectivement, ou est de 1,275 / 1 respectivement.

Avantageusement, le composite selon la présente invention est caractérisé en ce que ledit composite comprend un gradient de concentration de grains de poudre, par exemple orienté de l'intérieur vers l'extérieur du composite et préférentiellement croissant.

Avantageusement, le composite selon la présente invention est caractérisé en ce que ledit composite comprend un support ou contient une structure de renfort.

Avantageusement, le composite tel que ci-dessus est caractérisé en ce que la structure de renfort est une trame tissée ou non tissée.

De manière avantageuse, un tissu utilisé comme trame tissée ou non tissée peut être un tissu naturel, tel que le coton, ou synthétique, tel que le nylon®.

Avantageusement, l'objet de la présente invention concerne le composite selon la présente invention pour son utilisation en tant que film, préférentiellement thermo-rétractable ou en tant que textile, préférentiellement en rouleau.

Avantageusement, l'objet de la présente invention concerne le composite selon la présent invention pour son utilisation en tant que substrat, en particulier fil ou filament, pour impression 3D.

Par impression 3D on entend les procédés de fabrication additive. Ces procédés ont été développés pour le prototypage rapide, et à titre d'exemple on peut citer quelques technologies qui coexistent : le FDM (*Fuse Deposition Modeling* : modelage par dépôt de matière en fusion) ou la SLA (Stéréolithographie : une lumière UV solidifie une couche de plastique liquide). Ainsi le composite selon l'invention peut être utilisé pour la fabrication d'articles par impression 3D via technologie FDM ou SLA. En particulier, la FDM consiste à faire fondre un filament de matière synthétique telle qu'un composite selon l'inventionà travers une buse (un extrudeur) chauffée à une température variant entre 160 et 400 °C (dans le cadre de la fusion de polymères). Un petit fil de plastique en fusion en sort et ce il est déposé en ligne et vient se coller par re-fusion sur ce qui a été déposé au préalable. Ainsi des bobines en composite selon l'invention peuvent être utilsée selon un technologie d'impression 3D, en particulier le modelage par depôt de matière en fusion. Dans le cas présent, le liant du composition est un liant Thermoplastique.

Le composite selon l'invention peut aussi être utilisé pour une technologie SLA dans laquelle le liant est un polymère durcissable grâce à un catalyseur de prise activable aux UV.

Avantageusement, la présente invention concerne le composite tel que défini présentement pour son utilisation en tant que rideau, film adhésif, manchon, tel qu'un manchon de poignée de porte, bac, vêtement ou partie d'un vêtement, sac, poche, bâche, ou en tant que nappe. Ces différents objets peuvent être utilisés dans les domaines techniques requérant en particulier un milieu stérile ou appauvri en microorganismes, tels que les milieux agroalimentaire, pharmaceutique ou de la santé.

La présente invention concerne aussi le composite tel que défini dans la présente description pour la fabrication de granulés, plaques et ingrédients pour la plasturgie. Les granulés et plaques en composite selon l'invention peuvent être avantageusement utilisés pour la fabrication de pièces et articles formés par les techniques connues de plasturgie.

En ce qui concerne les techniques de mise en forme du composite selon l'invention on peut citer :

Le Moulage au contact : Procédé manuel permettant la réalisation de pièces à partir de résines thermodurcissables, à température ambiante et sans pression. Les renforts peuvent être déposés sur le moule et imprégnés de résine liquide, accélérée et catalysée, pour être mis en forme progressivement au moyen d'ébulleurs et de pinceaux. Après durcissement de la résine, la pièce est démoulée et détourée.

Moulage par projection simultanée : Procédé manuel ou robotisé permettant la réalisation de pièces à partir de résines thermodurcissables à température ambiante et sans pression. Les matières premières sont mises en oeuvre à l'aide d'une machine dite "de projection" comprenant un dispositif de coupe, une projection du renfort éventuel (roving) et d'un ou deux pistolets projetant simultanément la résine. Les fils coupés et la résine sont projetés sur la surface du moule puis compactés et ébullés à l'aide de rouleaux et d'ébulleurs. La résine préaccélérée est catalysée en continu lors de sa projection.

Moulage sous vide: s'effectue entre moule et contre-moule rigide, semi-rigide ou souple suivant les caractéristiques des pièces.
Un renfort (mat, tissu, préforme) peut être placé à l'intérieur du moule ; la résine catalysée est versée dans le moule. On utilise la pression qui s'exerce sur le moule lors de la mise sous vide pour répartir la résine et imprégner le renfort éventuellement présent. La résine peut également être admise ponctuellement par l'aspiration consécutive au vide.

Moulage par injection : Le moulage par injection de résine liquide RTM (Résine Transfert Molding) s'effectue entre moule et contre-moule rigides. Unrenfort (mats, préforme, éventuellement tissus) peut être disposé dans l'entrefer du moule. Une fois celui-ci solidement fermé, la résine, accélérée et catalysée, est injectée sous faible pression (1.5 à 4 bars) à travers le renfort jusqu'au remplissage complet de l'empreinte. Après durcissement de la résine, le moule est ouvert et la pièce démoulée.

Moulage à la presse à froid "voie humide" basse pression : à l'aide d'une presse à compression entre moule et contre-moule rigides, initialement sans apport thermique extérieur.
Moule ouvert, le renfort peut être posé sur la partie inférieure du moule et la résine, dotée d'un système catalytique très réactif, est versé en vrac sur le renfort.

La fermeture du moule sous pression (2 à 4 bars) entraîne la répartition de la résine dans l'empreinte et l'imprégnation du renfort. Le durcissement de la résine est accéléré progressivement par l'élévation de température du moule due à l'exothermie de la réaction, ce qui permet un démoulage rapide.

Moulage par injection de compound - BMC

Le compound B.M.C (Bulk Molding Compound) préparé dans un malaxeur est une masse à mouler constituée de résine, de charges et d'adjuvants divers, renforcée le cas échéant par des fils de verre coupés.

Le composite est moulé à chaud (130 - 150 °C) par injection (principalement) entre moule et contre-moule en acier usiné. La pression (50 à 100 bars) de fermeture du moule entraîne le fluage de la matière préalablement dosée et le remplissage de l'empreinte. Le temps de durcissement très court permet un démoulage rapide.

Moulage par centrifugation

A l'intérieur d'un moule en rotation à basse vitesse, on dépose des particules de la résine catalysée et accélérée et éventuellement des charges granulaires. Puis, on augmente la vitesse de rotation du moule pour densifier et débuller la matière. Après durcissement de la résine, éventuellement accélérée par un apport thermique, on peut extraire très facilement la pièce du moule. Cette technologie s'applique aussi aux résines thermoplastiques ou l'on chauffe le mélange pour le fluidifier, ce qui permet, lors de la rotation du moule, une répartition dans les formes dudit moule. Le melange est réfroidi et solidifié et la pièce est démoulée.

Avantageusement, le film ou textile composite selon la présente invention est caractérisé en ce qu'il présente au moins une couche adhésive supplémentaire. L'ajout d'un adhésif sur le composite de la présente invention peut se faire par toute technique connues de l'art, tel que la pulvérisation d'un agent adhésif, ou par trempage, imprégnation, etc.

L'objet de la présente invention concerne également un procédé de fabrication tel que décrit ci-dessus.

La fabrication d'une poudre métallique comme définie ci-dessus se fait par des techniques usuelles dans le domaine. De manière générale, le fractionnement du métal en poudre peut se faire par toute technique connue dans l'art, que ce soit par fractionnement mécanique, chimique, physique etc. Il est possible d'obtenir la poudre voulue selon la présente invention directement par un fractionnement adéquat, ce qui implique une parfaite maîtrise de la technique par l'opérateur qui fait néanmoins appel aux connaissances communes dans l'art. Il est en outre bien connu dans l'art une technique alternative plus facile qui consiste à fractionner la matière de manière grossière et peu régulière en granulométrie, puis par l'opération de tamisages successifs, d'isoler des populations de poudres particulières (c'est-à-dire présentant des granulométries particulières et régulières). Dans le cadre de la présente invention cette technique est tout à fait applicable : un fractionnement brut peut être opéré, suivi d'une étape d'échantillonnage et isolement des poudres particulières, puis une étape de sélection de poudres afin de reconstituer la poudre selon l'invention. Ces techniques sont extrêmement communes dans l'art. Le contrôle de la granulométrie fait en effet partie des connaissances générales de l'homme du métier. Ainsi, il est évident dans le contexte de la présente invention de la possibilité d'ajouter d'autres composés/poudres afin d'obtenir une composition « mixte », présentant les effets techniques décrits présentement en addition d'autres effets apportés par les composés/poudres secondaires ajoutés. Avantageusement, les poudres aux granulométries déterminées ont été obtenues par l'une quelconque des techniques de fractionnement connues dans l'art, suivies d'au moins deux passages sur tamis moléculaires permettant d'assurer que la taille des particules constituant la poudre ne sont ni trop petites, ni trop grosses en des quantités déterminées, assurant ainsi le parfait contrôle des caractéristiques essentielles nécessaires à la réalisation de la présente invention. Néanmoins et préférentiellement, le fractionnement se fait par une technique d'atomisation, par exemple à l'eau (suite à fusion métallique).

Un poudre adéquate peut être obtenue auprès de la société POUDMET (France) par exemple.

Ainsi, le procédé de fabrication d'une composition selon la présente invention est caractérisé en ce que la poudre métallique, préférentiellement de cuivre ($Cu^0$, oxydé et/ou phosphoré), est obtenue directement par fractionnement ou est reconstituée à partir de plusieurs poudres aux granulométries et proportions de métaux (e.g. cuivre) déterminées.

De manière avantageuse les particules obtenues par de telles techniques sont comprises entre 8 et 150 $\mu$m (D50) et/ou la quantité d'oxygène comprise dans la composition est entre 0,3 et 5% en poids.

Néanmoins, selon un mode de réalisation de l'invention l'oxydation du cuivre à proprement dite peut être faite après le fractionnement par le passage de la composition dans le four sous atmosphère contrôlée.

Par exemple en ce qui concerne la poudre de cuivre oxydé, l'oxydation peut se faire à une température égale ou supérieure à 500°C en présence d'oxygène et/ou d'une source d'oxygène, préférentiellement en présence de magnésium ou de phosphore. Selon un mode de réalisation, la température est supérieure à 800°C, 1000°C, 1500°C ou 2000°C.

Il peut être directement soufflé sur le cuivre de l'oxygène ou un gaz contenant de l'oxygène. De manière générale ceci se fait à l'air libre. Il peut également être incorporé un composé à même la poudre qui, lorsqu'il est chauffé, libérera de l'oxygène. Bien entendu, le cuivre peut être fractionné avant d'être chauffé pour permettre une meilleure oxydation. Le cuivre peut néanmoins être oxydé avant son fractionnement en poudre.

Avantageusement le procédé de fabrication selon la présente invention est caractérisé en ce qu'avant l'étape (c) est ajouté au composite ou déposé dans le moule un support ou une structure de renfort.

En outre, le composite (solide) selon la présente invention peut être fabriquer par toute technique connu du domaine applicable à la fabrication de composés souples tel que le caoutchouc. Ainsi, des techniques d'extrusion, de thermoformage, d'enrobage, etc. sont tout à fait applicables au présent cas d'espèce.

FIGURE

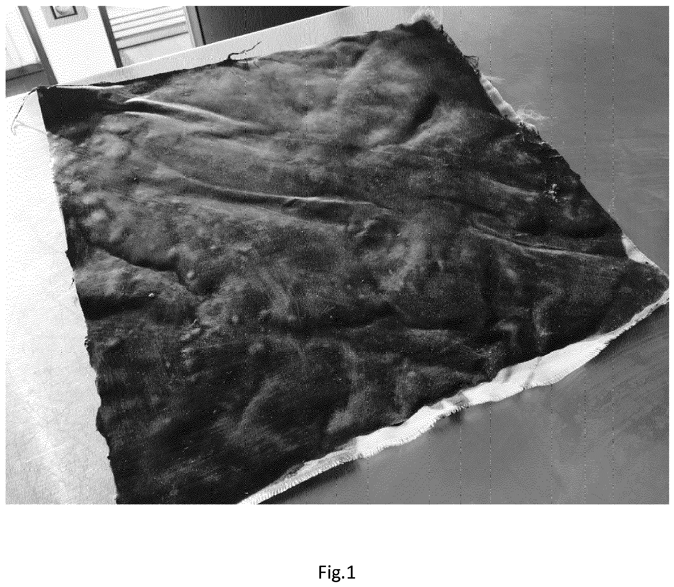

Figure 1 : Photographie du tissu obtenu selon l'exemple 3.

EXEMPLES

Afin d'illustrer la présente invention, les exemples suivants ont été réalisés. En aucun cas, l'objet de la présente invention n'est-il limité à ces seuls exemples.

1. Poudre à base de $CuP_8$

La poudre de $CuP_8$, dont la granulométrie n'est pas contrôlée est connue pour être utilisée dans la brasure.

De manière classique celle-ci a les caractéristiques suivantes :

|  |  |
|---|---|
| Composition nominale (% massique) : | Cu: 92 |
|  | P:8 |
| Point de fusion : | 710-750°C |
| Densité : | $8g/cm^3$ |

- Protocole de fabrication de la poudre de cupro-phosphore selon l'invention Selon la présente invention, l'alliage de cupro-phosphore contenant un pourcentage de phosphore entre 2 et 16% de préférence 8% est introduit dans le bain pour fusion. Cet alliage est ensuite atomisé à l'eau dans des conditions telles que le résultats granulométrique doit se trouver entre 8 et 150$\mu$m (D50), le taux d'oxygène est compris entre 0,3 et 5% en poids.

- La poudre suivante a été ainsi obtenue :

Tableau 1

| Granulométrie, % cumulé retenu (ISO4497) | | |
|---|---|---|
| Tailles particules | Pourcentages par tranche | Pourcentages cumulés retenus |
| ≥125 $\mu$m | 0,0 | 0,0 |
| ≥106 $\mu$m | 0,9 | 0,9 |
| ≥90 $\mu$m | 4,5 | 5,4 |
| ≥75 $\mu$m | 6,6 | 12,0 |
| ≥63 $\mu$m | 8,4 | 20,4 |
| ≥45 $\mu$m | 20,8 | 41,2 |
| <45 $\mu$m | 58,8 | 58,8 |
| Total | 100% | 100% (41,2+58,8) |
| Densité obtenue: 2,67 $g/cm^3$ (ISO3923/2) P% obtenu: 8,0% en masse | | |

## 2. Poudre de cuivre oxydé

Le même protocole que pour le cupro-phosphate a été appliqué pour le cuivre. La poudre suivante a été ainsi obtenue :

Tableau 2 :

| Granulométrie, % cumulé retenu (ISO4497) | | |
|---|---|---|
| Tailles particules | Pourcentages par tranche | Pourcentages cumulés retenus |
| $\geq$125 $\mu$m | 0,0 | 0,0 |
| $\geq$106 $\mu$m | 1.0 | 1.0 |
| $\geq$75 $\mu$m | 8.1 | 9.1 |
| $\geq$63 $\mu$m | 7.9 | 17,0 |
| $\geq$45 $\mu$m | 19.2 | 36.2 |
| <45 $\mu$m | 63.8 | 63.8 |
| Total | 100% | 100% (36,2+63,8) |
| Densité obtenue: 2,88 g/cm$^3$<br>$O_T$% : 0,35% en masse (ISO4491-4) | | |

Ensuite, la poudre obtenue est passée dans un four à bande à une température supérieure à 500°C (environ 800°C en l'occurrence) pour l'oxyder, sous atmosphère contrôlée.

Une poudre avec la même granulométrie que précédemment a été obtenue avec :

densité obtenue : 1,60 g/cm$^3$

$O_T$% : 0,08% en masse

Cu%> 99,7 %en masse

## 3. Exemple de composite obtenu

Les composites sont simplement obtenus en mélangeant les composés entre eux.

Il est fortement conseillé de respecter les temps de prise du composite (environ 20min à 20°C par couche - imprégnation à effectuer dans ce délai si présence d'une trame tissée/non-tissée). Le liant peut être préalablement chauffé pour fluidifier, le temps de prise est en ce cas réduit

Tableau 3 : composite(s) obtenu

| | Composite |
|---|---|
| Poudre métallique | CuP$_8$ (poudre exemple 1) |
| Liant (proportions en masse) | ISOCYANATE 74% |
| Durcissant (proportions en masse) | POLYOL 26% |
| Proportions en masse de Poudre/Liant | Poudre = 1<br>Liant = 1 |
| Suspension réalisable | oui |
| Temps de prise | 20 minutes |

Par exemple, le composite du tableau 3 a été simplement imprégné par trempage dans une trame tissée (tissu commercial comportant des fibres synthétiques et naturelles) avant le temps de prise efficace (cf. figure 1 : photo du matériau obtenu). Le tissu obtenu a gardé ses propriétés mécaniques initiales (souplesse) tout en présentant les propriétés physico-chimiques additionnelles apportées par le composite du tableau 3.

4. Biocidie

Les poudres de cuivre (Cu$^0$, oxydé et/ou phosphoré ont précédemment été étudiés dans des revêtements rigides et ont démontrés une biocidie avérée. Le composite selon la présente invention présente également donc la même biocidie.

**Revendications**

1. Composite polymérique comprenant:

   - un liant de type élastomère,
   - une poudre métallique, comprenant 30% en masse de grains avec un diamètre supérieur à 45$\mu$m et du cuivre, dispersée dans le liant;

   **caractérisé en ce que** ledit composite a un module de Young (E) inférieur à 1 GPa, préférentiellement inférieur à 0.5 GPa.

2. Composite selon la revendication 1 **caractérisé en ce que** le liant est un liant organique ou inorganique, ou un mélange des deux.

3. Composite selon l'une quelconque des revendications 1 à 2 **caractérisé en ce que** le liant est choisi parmi un plastique, un latex, un caoutchouc, un polyéthylène, le polypropylène, le polyuréthane, un polymère époxy, le vinyle ester, les polymères en phase aqueuse, les nylons®, les polyamides, les polycarbonates, les polystyrènes, le polyméthacrylate de méthyle, un polymère de silice tel qu'un silicone, les polydiméthylsiloxanes, les polythiazyles, les polysilanes, les polygermanes, plus préférentiellement un polymère de silice.

4. Composite selon l'une quelconque des revendications 1 à 3 **caractérisé en ce que** la poudre comprend au moins un métal choisi parmi le magnésium, l'étain, le technétium, le rhénium, le titane, le fer, le chrome, le cobalt, l'or, le zinc, le platine, le cadmium, l'aluminium, le nickel, l'argent, le béryllium, le calcium et le strontium.

5. Composite selon l'une quelconque des revendications 1 à 4 **caractérisé en ce que** la poudre comprend du cuivre Cu$^0$, oxydé et/ou phosphoré, préférentiellement comprise à un taux allant de 60% jusqu'à 100% en masse de la poudre métallique.

6. Composite selon la revendication 5 **caractérisé en ce que** le taux d'oxydation du cuivre est supérieur à 95% en masse de cuivre oxydé vis-à-vis de la masse totale de cuivre dans la poudre.

7. Composite selon l'une quelconque des revendications 1 à 6 **caractérisée en ce que** le composite comprend une proportion en masse de poudre / liant comprise de 1/2 à 2/1 respectivement, préférentiellement de 1,2/1 à 1,6/1 respectivement.

8. Composite selon l'une quelconque des revendications 1 à7 **caractérisé en ce que** ledit composite comprend un support ou contient une structure de renfort.

9. Composite selon la revendication 10 **caractérisé en ce que** la structure de renfort est une trame tissée ou non tissée.

10. Composite selon l'une quelconque des revendications 1 à 9 pour son utilisation en tant que film, préférentiellement thermo-rétractable ou en tant que textile, préférentiellement en rouleau.

11. Composite selon l'une quelconque des revendications 1 à 10 pour son utilisation en tant que rideau, film adhésif, manchon tel qu'un manchon de poignée de porte, bac, vêtement ou partie d'un vêtement, sac, poche, bâche, ou en tant que nappe.

12. Procédé de fabrication d'un composite selon l'une quelconque des revendications 1 à 11 **caractérisé par** les étapes :

   - (a) mélange d'un précurseur du liant à l'état liquide avec la poudre métallique ;
   - (b) coulée du mélange obtenu à l'étape (a) dans un moule ;

- (c) solidification du mélange de l'étape (b), préférentiellement par une variation de température ou par l'ajout d'un catalyseur ; et
- (d) démoulage du composite figé.

**13.** Procédé de fabrication selon la revendication 12 **caractérisé en ce qu'**avant l'étape (c) est ajouté au composite ou déposé dans le moule un support ou une structure de renfort.

**14.** Film, préférentiellement thermo-rétractable, textile, préférentiellement en rouleau, rideau, un manchon tel qu'un manchon de poignée de porte, vêtement ou partie d'un vêtement, sac, poche, bâche, bac, ou nappe comprenant un composite selon l'une quelconque des revendications 1 à 11.

**15.** Film ou textile selon la revendication 14 **caractérisé en ce qu'**il présente au moins une couche adhésive supplémentaire.


**Patentansprüche**

**1.** Polymerkomposit, umfassend:

- ein Bindemittel, vorzugsweise vom Typ Elastomer,
- ein Metallpulver, das vorzugsweise 30 Ma% Partikel mit einem Durchmesser über 45 $\mu$m und Kupfer umfasst, das in dem Bindemittel dispergiert ist;

**dadurch gekennzeichnet, dass** das Komposit ein Young-Modul (E) unter 1 GPa, vorzugsweise unter 0,5 GPa, hat.

**2.** Komposit nach Anspruch 1, **dadurch gekennzeichnet, dass** das Bindemittel ein organisches oder anorganisches Bindemittel oder ein Gemisch der beiden ist.

**3.** Komposit nach einem der Ansprüche 1 bis 2, **dadurch gekennzeichnet, dass** das Bindemittel aus einem Plastik, einem Latex, einem Gummi, einem Polyethylen, dem Polypropylen, dem Polyurethan, einem Epoxypolymer, dem Vinylester, den Polymeren in wässriger Phase, den Nylons®, den Polyamiden, den Polycarbonaten, den Polystyrolen, dem Polymethylmethacrylat, einem Siliciumdioxid-Polymer wie ein Silikon, den Polydimethylsiloxanen, den Polythiazylen, den Polysilanen, den Polygermanen, noch vorzugsweiser einem Siliciumdioxid-Polymer ausgewählt ist.

**4.** Komposit nach einem der Ansprüche 1 bis 3, **dadurch gekennzeichnet, dass** das Pulver mindestens ein Metall umfasst, das aus dem Magnesium, dem Zinn, dem Technetium, dem Rhenium, dem Titan, dem Eisen, dem Chrom, dem Kobalt, dem Gold, dem Zink, dem Platin, dem Kadmium, dem Aluminium, dem Nickel, dem Silber, dem Beryllium, dem Kalzium und dem Strontium ausgewählt ist.

**5.** Komposit nach einem der Ansprüche 1 bis 4, **dadurch gekennzeichnet, dass** das Pulver oxidiertes und/oder phosphoriertes Kupfer $Cu^0$ umfasst, vorzugsweise in einem Gehalt von 60 bis 100 Ma% des Metallpulvers

**6.** Komposit nach Anspruch 5, **dadurch gekennzeichnet, dass** der Oxidationsgrad des Kupfers über 95 Ma% oxidiertes Kupfer gegenüber der Gesamtmasse Kupfer in dem Pulver beträgt.

**7.** Komposit nach einem der Ansprüche 1 bis 6, **dadurch gekennzeichnet, dass** das Komposit ein Massenverhältnis Pulver/Bindemittel von jeweils 1/2 bis 2/1, vorzugsweise von jeweils 1,2/1 bis 1,6/1, umfasst.

**8.** Komposit nach einem der Ansprüche 1 bis 7, **dadurch gekennzeichnet, dass** das Komposit einen Träger umfasst oder eine Verstärkungsstruktur enthält.

**9.** Komposit nach Anspruch 10, **dadurch gekennzeichnet, dass** die Verstärkungsstruktur ein Wirkoder Vliesstoff-Raster ist.

**10.** Komposit nach einem der Ansprüche 1 bis 9 für seine Verwendung als vorzugweise thermisch schrumpfbare Folie oder als Textil, vorzugsweise in Rollenform.

**11.** Komposit nach einem der Ansprüche 1 bis 10 für seine Verwendung als Vorhang, Haftfolie, Hülse wie eine Türgriffhülse, Behälter, Bekleidung oder Teil einer Bekleidung, Beutel, Tasche, Plane oder als Decke.

**12.** Verfahren zur Herstellung eines Komposits nach einem der Ansprüche 1 bis 11, **gekennzeichnet durch** die Schritte:

- (a) Mischen eines Vorläufers des Bindemittels in flüssigem Zustand mit dem Metallpulver;
- (b) Gießen des in Schritt (a) erhaltenen Gemischs in eine Form;
- (c) Verfestigen des Gemischs von Schritt (b), vorzugsweise durch eine Temperaturänderung oder durch Hinzufügen eines Katalysators; und
- (d) Entformen des erstarrten Komposits.

**13.** Herstellungsverfahren nach Anspruch 12, **dadurch gekennzeichnet, dass** vor dem Schritt (c) dem Komposit ein Träger oder eine Verstärkungsstruktur hinzugefügt oder in der Form abgelegt wird.

**14.** Folie, vorzugsweise thermisch schrumpfbar, Textil, vorzugsweise in Rollenform, Vorhang, eine Hülse wie eine Türgriffhülse, Bekleidung oder Teil einer Bekleidung, Beutel, Tasche, Plane, Behälter oder Decke, umfassend ein Komposit nach einem der Ansprüche 1 bis 11.

**15.** Folie oder Textil nach Anspruch 14, **dadurch gekennzeichnet, dass** sie/es mindestens eine zusätzliche Haftschicht aufweist.

**Claims**

**1.** A polymer composite comprising:

- a binder of elastomeric type,
- a metal powder, comprising 30% by mass of grains with a diameter greater than 45 $\mu$m and copper, dispersed in the binder;

**characterized in that** said composite has a Young's modulus (E) less than 1 GPa, preferentially less than 0.5 GPa.

**2.** The composite as claimed in claim 1 **characterized in that** the binder is an organic or inorganic binder, or a mixture of both.

**3.** The composite as claimed in any one of claims 1 to 2 **characterized in that** the binder is selected from a plastic, a latex, a rubber, a polyethylene, polypropylene, polyurethane, an epoxy polymer, vinyl ester, aqueous-phase polymers, nylons®, polyamides, polycarbonates, polystyrenes, polymethylmethacrylate, a silica polymer such as a silicone, polydimethylsiloxanes, polythiazyls, polysilanes, polygermanes, more preferably a silica polymer.

**4.** The composite as claimed in any one of claims 1 to 3 **characterized in that** the powder comprises at least one metal selected from magnesium, tin, technetium, rhenium, titanium, iron, chromium, cobalt, gold, zinc, platinum, cadmium, aluminum, nickel, silver, beryllium, calcium and strontium.

**5.** The composite as claimed in any one of claims 1 to 4 **characterized in that** the powder comprises copper $Cu^0$, oxidized and/or phosphorized, preferably in a proportion of 60% up to 100% by mass of the metal powder.

**6.** The composite as claimed in claim 5 **characterized in that** the oxidation ratio of the copper is greater than 95% by mass of oxidized copper relative to the total mass of copper in the powder.

**7.** The composite as claimed in any one of claims 1 to 6 **characterized in that** the composite comprises a proportion by mass of powder to binder comprised from 1:2 to 2:1 respectively, preferably 1.2:1 to 1.6:1 respectively.

**8.** The composite as claimed in any one of claims 1 to 7 **characterized in that** said composite comprises a support or contains a reinforcement structure.

**9.** The composite as claimed in claim 10 **characterized in that** the reinforcement structure is a woven or nonwoven web.

**10.** The composite as claimed in any one of claims 1 to 9 for use as a film, preferably heat-shrinkable, or as a textile, preferably on a roll.

**11.** The composite as claimed in any one of claims 1 to 10 for use as a curtain, an adhesive film, a sleeve such as a door-handle sleeve, a tray, a garment or a part of a garment, a bag, a pouch, a tarpaulin, or as a tablecloth.

**12.** A method for fabricating a composite as claimed in any one of claims 1 to 11 **characterized by** the steps:

- (a) mix a precursor of the binder in the liquid state with the metal powder;
- (b) cast the mixture obtained in step (a) into a mold;
- (c) solidify the mixture of step (b), preferably by varying the temperature or by adding a catalyst; and
- (d) release the set composite from the mold.

**13.** The fabrication method as claimed in claim 12 **characterized in that**, before step (c), a support or a reinforcement structure is added to the composite or deposited in the mold.

**14.** A film, preferably heat-shrinkable, textile, preferably on a roll, curtain, sleeve such as a door-handle sleeve, garment or part of a garment, bag, pouch, tarpaulin, tray, or tablecloth comprising a composite as claimed in any one of claims 1 to 11.

**15.** The film or textile as claimed in claim 14 **characterized in that** it has at least one additional adhesive layer.

Fig.1

**RÉFÉRENCES CITÉES DANS LA DESCRIPTION**

**Documents brevets cités dans la description**

- FR 1357099
- FR 1400766
- EP 2014065498 W

**Littérature non-brevet citée dans la description**

- *Moteur Boat Magazine,* Juin 2013, 133-137